# EUROPEAN PATENT APPLICATION

(11) **EP 2 609 841 A1**
(43) Date of publication of application: **03.07.2013**
(21) Application number: 12168942.6
(22) Date of filing: 22.05.2012
(51) Int. Cl.: A47J 43/07

(54) **Food processor comprising a bouncing utensil**

(30) Priority: 27.12.2011 US 201113337412
(71) Applicant: Menashes, David, 34670 Haifa (IL)
(72) Inventor: Menashes, David, 34670 Haifa (IL)
(74) Representative: Beck & Rössig European Patent Attorneys

(57) **Abstract**

A food processor provided with a bowl having an open top, a bottom and walls that comprises a food processing utensil (300) coupled to the bowl and configured to rotate in the bowl about a rotation axis, the food processing utensil is provided with food-processing elements (327) selected from the group comprising: blades, paddles, wings and combinations thereof; and resilient means (352, 354) configured to allow the food processing utensil or a part thereof to bounce relative to the rotation axis. In another embodiment, the food processor is provided also with a cover coupled to the open top. The food processor also comprises a slanted shoulder provided to the food processing utensil and a slanting part provided to the cover, wherein the food processor is configured to allow the food processing utensil or a part thereof to bounce during rotation of the food processing utensil.

## Description

### FIELD OF THE INVENTION

The present invention relates to utensils and accessories for food processors. More particularly, the present invention relates to a universal blade composed of a plurality of elements capable of efficiently and effectively chopping dry and wet food, or mixing, steering, whipping, grinding and blending food.

### BACKGROUND OF THE INVENTION

There are many activities performed on greatly different types of material in the kitchen, and for each type of activity as well as each type of material, a different utensil may be commercially available.

However, such numerous and various utensils may each require optimization, or at least improvement, or combination with each other to save space, costs, etc. In addition, it would be desirable that the utensils be useful both separately and in combination. Some combinations may even produce a new effect as a result of operating the combination.

WO10150263 describes a food processor for concomitantly stirring, whipping and chopping food preparations, the food processor comprising: a motor, a bowl with an open top, a bottom and walls, and a food processing utensil, the food processing utensil comprising: at least one paddle; at least one wing; at least one cutting blade, the blades having free ends, and a central utensil comprising: a two-ended shaft and a base, the shaft culminating on a first end with a spindle operationally coupleable to a food processor motor, and connected on the second end to a base coupled to the food processor bowl, the paddles, blades and wings coupled to the central utensil; and-configured such that when the bowl is filled with a food preparation to at least a level of the paddle, and the central utensil is coupled to the motor and then rotated in the food preparation around a rotational axis, the food is uniformly cut and/or whipped.

One object of the present invention to provide an improved food processor composed of several features that can be added together or separately to a food processor such as described in WO10150263, or in other food processors, and that is capable of manipulating and preparing many different types of food commonly prepared by many different kinds of tools such as coffee grinder, blander, meat chopper, juicer, etc.

### BRIEF DESCRIPTION OF THE FIGURES

In order to better understand the present invention and appreciate its practical applications, the following Figures are attached and referenced herein. Like components are denoted by like reference numerals.

It should be noted that the figures are given as examples and preferred embodiments only and in no way limit the scope of the present invention as defined in the appended Description and Claims.
- Figure 1: illustrates a central utensil capable of being fitted in a food processor or blender (hereinbelow uniformly addressed as a food processor), the utensil including blades, and configured to be coupleable to a cutting and stirring accessory;
- Figure 2: illustrates in perspective view a stirring and cutting accessory suitable for securely mounting on a central utensil such as in Figure 1;
- Figure 3: illustrates a perspective view of a food processing utensil assembled from the central utensil shown in Figure 1 and the accessory shown in figure 2;
- Figure 4: depicts a cross section of a food processing utensil for a food processor, wherein the food processor includes resilient means;
- Figure 5a: depicts a central utensil having a slot that allows a coupled accessory to bounce up and down;
- Figure 5b: shows a different central utensil that also allows an accessory to bounce;
- Figure 6a: illustrates in side view a food processor where the cover of the includes resilient means;
- Figure 6b: shows the food processor illustrated in Figure 6a, after rotation of the food processing utensil.
- Figure 7a: illustrates a food processing utensil wherein some of the blades have teeth and flaps, and
- Figure 7b: shows an expanded view of a blade with a flap.

### SUMMARY OF INVENTION

According to a first aspect, a food processor is provided, comprising: a bowl with an open top, a bottom and walls, resilient means, and a food processing utensil,
the food processing utensil having food-processing elements selected from the group comprising: blades, paddles and wings and combinations thereof;
the food processing utensil coupled to the bowl;
the processor configured to allow the coupled food processing utensil to rotate in the bowl about a rotation axis, and
said resilient means configured to allow the food processing utensil or a part thereof to parallel to the rotation axis upon contact of at least one of said food-processing elements with a food preparation in the bowl.
According to a first aspect, a food processor is provided, comprising: a bowl with an open top, a bottom and walls, a cover and a food processing utensil,
the food processing utensil having food-processing elements selected from the group comprising: blades, paddles and wings and combinations thereof;
the food processing utensil coupled to the bowl;
the processor configured to allow the coupled food processing utensil to rotate in the bowl about a rotation axis;
the food processing utensil having a slanted shoulder;
the cover coupled to the open top and having a slanting part thereof;
the food processor configured to allow the food processing utensil or a part thereof to bounce during rotation of the food processing utensil from interaction of the the slanted shoulder and the slanting part of the cover.

Some embodiments with said slanted parts further comprise resilient means allowing the food processing utensil or a part thereof to bounce during rotation of the food processing utensil from interaction of the slanted shoulder and the slanting part of the cover.

Some embodiments further comprise a central utensil and a food processing accessory coupled to the central utensil, the accessory having at least one of said food-processing elements;
the central unit sleeved in and coupled to the accessory.
the food processing utensil may have at least one blade comprising a flap inclined toward the bowl bottom.

Preferably, the wings extend out from the food processing utensil, and are arcuate and inclined roughly 15-50° from the rotational axis.

The blades may comprise a set of top blades, each top blade comprising a flat horizontal base and a free end extending away from the bottom of the bowl and at least to the paddles.

The top blades may extend to the wings.

The angles of the top blades relative to the axis of rotation may be different from each other.

The blades preferably each have a fixed end, and at least one blade has the free end closer than the fixed end to the bowl bottom.

The food processor having said slanted parts may further comprising resilient means configured to allow the food processing utensil or a part thereof to bounce parallel to the rotation axis upon contact of at least one of said food-processing elements with a food preparation in the bowl.

In some embodiments of food processor having said slanted parts and said resilient means, resilient means may be held between the food processing utensil and the cover, or in the cover.

In some embodiments resilient means is held between the food processing utensil and the bowl.

In some embodiments resilient means is held within the accessory.

Said resilient means may comprise at least one spring.

The food processors may further comprise a motor configured to allow rotation of the food processing utensil sufficiently fast to whip the food preparation and the motor is capable of variable speed.

In some embodiments comprising a central utensil and an accessory,the central utensil further comprises a key and the accessory further comprises a slot, or the central utensil further comprises a slot and the accessory further comprises a key, the slot and key configured to allow the accessory coupled to the central utensil to move parallel to the rotation axis relative to the central utensil.

In some embodiments, the central utensil is devoid of blades and the accessory comprises blades, the blades each having a fixed end, and wherein at least one blade has the free end closer than the fixed end to the bowl bottom.

The food processing accessory may be retrofittable to a commercially available central utensil.

### DETAILED DESCRIPTION

The invention relates to improved food processors, blenders and food processing utensils and accessories to aid in the preparation of food or liquids, that will be performing food processing activities such as but not limited to: chopping, mixing, stirring, whisking, squeezing, straining, whipping and many other food preparation activities as will be described hereafter.

An object of the invention is to provide a food processing utensil that will replace the common appliances similar to a food processor, juicer, blender, mixer, and other appliances as such. The embodiments described herein utilize advanced utilities and accessories to perform all the functionalities with the use of a single utensil.

A further object of the invention is to provide a multi function unique blade for the purpose of food processing.

These together with additional objects, features and advantages of the food processor, blender and food processing utensil will be readily apparent to those of ordinary skill in the art upon reading the following detailed description, and viewing the illustrative, embodiments of the food processing utensil when taken in conjunction with the accompanying drawings.

In this respect, before explaining the current embodiments of the food processing utensil in detail, it is to be understood that the food processing utensil is not limited in its applications to the details of construction and arrangements of the components set forth in the following description or illustration. Those skilled in the art will appreciate that the concept of this disclosure may be readily utilized as a basis for the design of other structures, methods, and systems for carrying out the several purposes of the food processing utensils. It is therefore important that the claims be regarded as including such equivalent construction insofar as they do not depart from the spirit and scope of the food processing utensils. It is also to be understood that the phraseology and terminology employed herein are for purposes of description and should not be regarded as limiting.

The invention relates to utensils that may concomitantly both stir and chop food preparations. The stirring may be of layers of the preparation such that food both below and above the blades, preferably throughout the food preparation place in a food processor or blender, has similar, preferably identical, consistency and composition as of the food in the layer through which the blades pass through.

Alternatively or additionally, the utensils may stir or introduce air into the food preparation, which may produce results similar to those obtained as a result of using a commercially available manual or electrical whisk on the preparation, yet preferably the results are obtained within a much shorter time.

Reference is now made to the figures representing different combinations of blenders or food processors and utensils that are capable of being fitted in a food processor or blender.

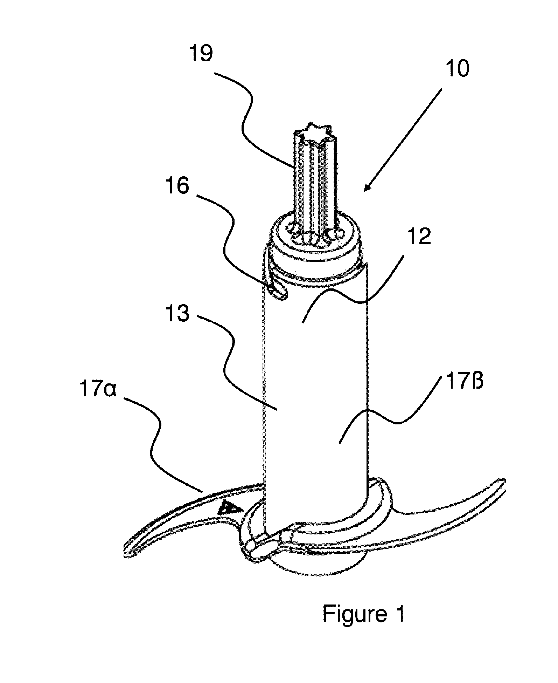

Figure 1 illustrates a central utensil 10 that is capable of being fit into a food processor. The utensil 10 includes the following parts: a shaft 12 with a spindle 19, a base 13, slot 16, and cutting blades 17α, 17ß.

However, as will later be further explained, in other embodiments the central utensil may include more or less parts, for example simpler utensils that lack a slot, or utensils that have more than one pair of paddles, for example.

The shaft 12 is positioned to receive rotational power on its upper side from a motor of a food processor (not shown in the figures). The base 13 may be placed on the bottom of a food processor bowl (not shown in the figures).

The slot 16 allows secure engagement of additional accessories with the shaft 12.

Central utensil 10 is equipped with a pair of cutting blades 17α, 17ß projecting radially from base 13 with respect to the axis A of rotation of the utensil, in accordance with different embodiments.

Cutting blades pair 17 is capable of chopping wet and dry food including but not limited to meat or fish and may also be capable of crushing ice.

Shaft 12 includes a spindle 19 at its top to allow transfer of torque from the motor of the food processor to the central utensil 10.

The central utensil can be mounted in a food processor in which the rotational force is applied from the top. Yet, to a person skilled in the area it should be clear and simple to adapt the central utensil to be used in a food processor where the rotation force is applied from the bottom side.

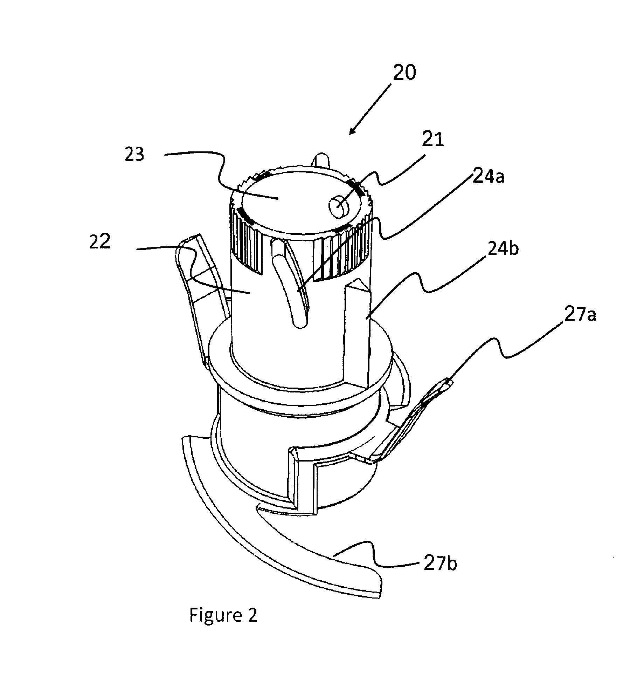

Figure 2 illustrates a cutting, stirring and whisking accessory 20 capable of being secured to a central utensil such as the utensil 10, shown in Figure 1.

Accessory 20 includes a cylindrically shaped body 22 with an opening 23, a pair of wings 24a, a pair of paddles 24b and a locking key 21.

The locking key 21 is configured to engage slot 16 such that the accessory 20 is secured to the central utensil 10.

Wings 24a may be configured so that when submerged in the stirred preparation they are capable of disrupting mixing zones of the preparation and thus enhancing circulation of these zones, to be further processed and thus helping to enable generation of a relatively homogeneous and uniformly cut mixture.

Wings 24a may also or alternatively be configured so that when being situated closely above the surface of the stirred preparation, they allow circulation of air into the food preparation, similar to the effect of the operation of a whisk.

Paddles 24b may be configured to assist in stirring the preparation

The stirring and cutting accessory 20 further includes two pairs of cutting blades 27a and 27b.

Cutting blade pairs 27a, 27b are each designed to be located in different heights relative to the bottom of the food processor's bowl (not shown) for cutting food at different levels of the food preparation, and may have different sizes and orientation, angles and /or shapes to cut food particles of different sizes or consistencies or to cut into different sizes and shapes, and may work in a complementary or synergic manner to each other to optimize cutting of the contents of the preparation.

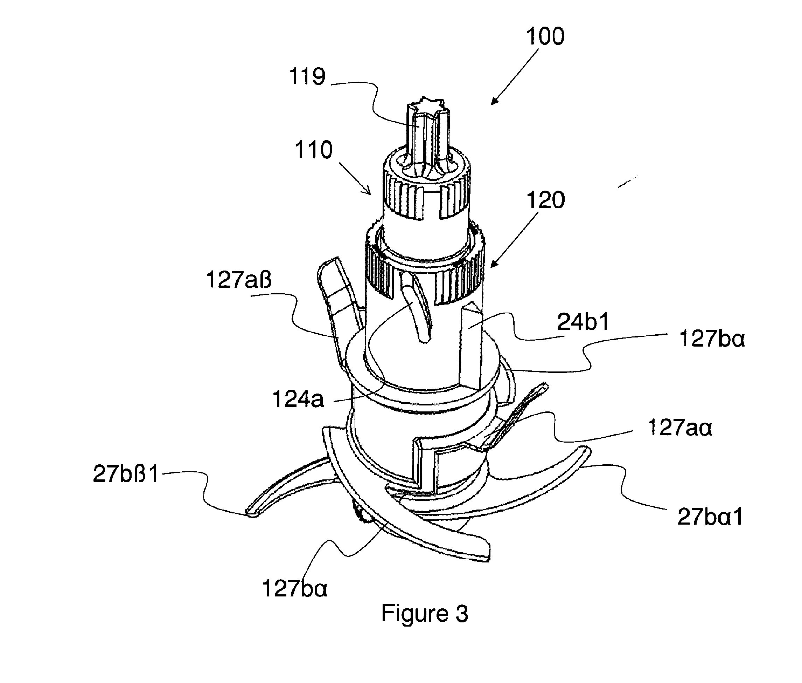

Figure 3 shows a perspective view of a food processing utensil 100 assembled from the central utensil shown in Figure 1 and the accessory 20 shown in figure 2. Food processing utensil 100 includes a stirring and cutting accessory 120 securely mounted on central utensil 110.

Spindle 119 of central utensil 110 allows transfer of torque from the motor of the food processor to both the central utensil 110 and the coupled accessory 120.

In various embodiments, the various blades on the central utensil and/or accessory may be of different shapes and sizes, and oriented in different angles relative to the base of the bowl; each one may be adjusted for processing different types of food, in accordance with different embodiments.

The combinations of the different blades in several heights and optionally their shape and positions along the circumference of the processing device enhance the ability of the cutting blades to chop and grind food such as but not limited to: coffee, beans, sugar, chickpeas, nuts, vegetables, fruits, leaves, herbs such as parsley and coriander, spices, wheat weed, flax seeds, peanuts, sprouts, pomegranate seeds, chocolate, and hard cheese.

Note, for example in Figure 1, that the pair of blades 17α, 17ß of the central utensil 10 are not at the same height, the right blade 17ß being lower than the left blade 17α, and may have slightly or significantly different contours. Similarly, the pair of blades 127bα, 127bß of the accessory 120 may be arranged so that one is higher than the other, as well as perhaps having different contours. The other pair of blades 127aα, and 127aß of the accessory 120, positioned above all the other blades in the device 100, although both flat horizontal bases being positioned at the same height in these particular embodiments, may be differently angled, such that the free end of one is significantly farther away from the axis of rotation A than the other is.

The contours of the blades may each be custom designed to fulfill a different task, and yet be functionally synergic. For example, some of the blades may be contoured so that when the device 100 rotates, the blades push the food proximal to the blades upward, whereas some of the other blades push the food proximal to them downwards. The food may thus be bounced back and forth between different blades, each blade cutting the food in a unique direction.

The vertical distance between proximal blades along the rotational axis is typically short in various embodiments, such that the distance is less than 10mm, preferably 8-9mm or less. Such short distances may assist in uniform cutting even when operating the food processor for mere seconds.

The wings and paddles may be positioned at different heights (not shown) or angles relative to each other, and the blades may also be less than 10mm above an adjacent blade. Yet in some embodiments the blades are at the same height.

Blades 127a are at a different angle with respect to the rotational axis A, as compared to blades 127b. Blades 127b, however, are at a more similar angle to blades 117 (relative to rotational axis A). In other embodiments (not shown), blades 127b and 117 may have entirely different angles. The variety of angles allows for example cutting food into a different size for each blade, which may allow synergic finer and faster chopping for example. Since the food is efficiently and quickly moved between blades, uniform cutting is achieved at even short operation times.

Generally, for purposes of maintaining balance of the device during operation of the food processor, it may be preferable that the blades be arranged in somewhat similarly sized blade sets suitably positioned on the food processor utensil to maintain balance, for example by placing equal twin blades opposite each other on the food processor utensil. However, in some embodiments sets of similar shaped blades may have different lengths for example, to allow efficient cutting for example. Similarly, in the same or other embodiments, there may be sets of similarly sized yet differently shaped blades. To maintain balance of the food processor utensil 100 and minimize strain, due to the geometrical differences between the blades in each pair, the blades may be differently sized, in their width or thickness, for example.

In some embodiments (not shown), there are more than two blades of similar angles, shapes and sizes, proximal to each other along the axis of rotation, in either or both of the utensil and the accessory. In such embodiments, the similar blades may be fairly equidistant from each other, or otherwise positioned on the food processor utensil to help maintain balance, and compensations may be made for different contours, angles etc., again to improve the performance of the device.

Wings 124a are typically long arc-shaped structures, typically made of plastic, extending out from and fused with or molded with body 122 and inclined preferably about 30-15° from the rotation axis A, whereas paddles 124b are typically plastic triangular structures with their base fused with the body 122, the angles of the base being preferably roughly about 85°.

According to one embodiment the device is used for whisking, by filling a bowl with food preparation (not shown) such that when the device rotates, the paddles 124a are submerged or at least immersed in the food preparation, whereas the wings 124b are at least partially exposed to air.

The device may be so efficient that it could take mere seconds to achieve the desired whipping of the food preparation.

For example, a device 100 including the following structural features may be used: the wings 124a each extend about 6mm from the body 122 and have an arc length of about 9mm and an incline of roughly 30°, the paddles 124b are each about 5mm high; the exemplary device 100 has number of blades and the blades have a configuration and contours as shown in the Figures 2, 3 and 4, and the bowl (not shown) has an inside diameter of about 120 mm, the blades' free ends reaching to about 9-3mm from the walls of the bowl. Such device was found to achieve good whipping in a few seconds by being rotated at between roughly 1000 to 3000 rounds per minute (rpm), most preferably at around 2000 rpm.

The level of the top of paddles 124b should correspond with the level of the bottom of the wings 124a or there should be an overlap of the levels, such that there is no layer between the paddles 124b and wings 124a that is not worked upon by the paddles 124b or the wings 124a.

Without being bound by theory, it is thought that in operation of the device 100, the paddles 124b allow food preparations to transport outwards towards the bowl walls, and the wings cause the food preparation or air (depending on the type and/or level of the food preparation) to transport downwards proximal to the walls of the bowl, due to their geometry. The wings 124a and paddles 124b are thus thought to cooperate to assist in whipping or circulating the food preparation to produce homogeneously whipped and/or uniformly cut food preparations. Top blades 127aα, 127aß may also assist in whipping due to their relatively vertical orientation.

When whipping is not desired, a user may for example fill in the bowl with preparation only until below the paddles 124b, or alternatively above the wings 124a, or use a different embodiment that lacks wings, and/or select a non-optimal rotation speed on the food processor.

The accessories may comprise both blades or other cutting means, and paddles, and wings or other circulating means. Other accessories may comprise fewer elements, for example an accessory suitable for use with a central utensil shown in Figure 2 may include only wings.

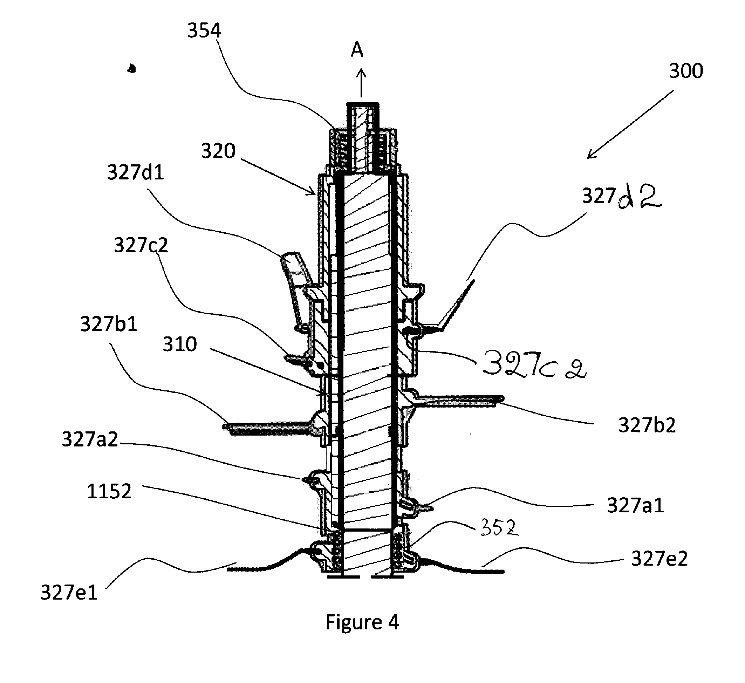

Figure 4 shows a cross section of a food processing utensil 300 for blender or food processor embodiments.

The food processor comprises: a motor, a bowl with an open top, a bottom and walls (all not shown), and the food processing utensil 300. The food processing utensil 300 has a general structure similar to the utensil 100 shown in Figure 3.

However, the food processor further comprises resilient means, e.g. springs 352 and 354.

The springs 352, 354 are configured to allow the food processing utensil 300 or a part thereof to bounce along or parallel to the rotation axis A upon contact of at least one of said food-processing elements with a food preparation in the bowl.

The food processing utensil 300 is coupled to the motor or other rotation means and bowl; The processor is configured to allow the coupled central utensil 310 to rotate in the bowl about a rotation axis A.

The lower spring 352 is held between the central utensil 310 and the bowl bottom. When any of blades 327a1, 327a2, 327b1, 327b2 hit food that is above the blades, the central utensil 310 is forced downwards, and the spring 352 causes the central utensil 310 to bounce back up. The central utensil may thus continuously bounce up and down, causing the blades 327a1, 327a2, 327b1, 327b2 and perhaps also blades 327c1, 327c2 and 327d1 (and other blades hidden from view) to change levels in the food mixture, thus improving the cutting ability of the food processor.

Similarly, blades 327c1, 327c2 and 327d1 (and other blades hidden from view) on accessory 320 may hit food that is above the blades, the accessory 310 is forced downwards, and the spring 354 causes the accessory 320 to bounce back up.

In other embodiments (not shown), the utensil comprises at least one food-processing element selected from the group comprising: paddles and wings and combinations thereof. The paddles and wings further assist in homogenizing and/or whipping and/or chopping the food.

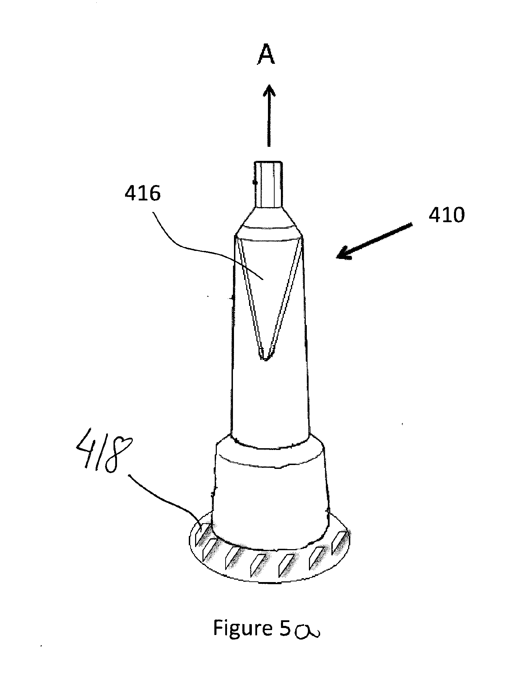

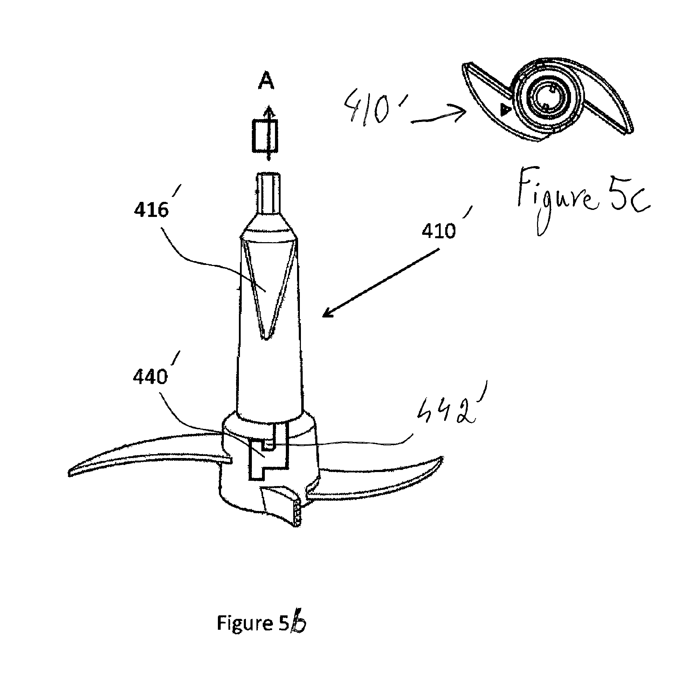

Note that contrary to food processing utensil 100 discussed above, in food processing utensil 300 the accessory 320 is not fully secured to the central utensil 310 but rather has some freedom to slide up and down in the direction of the rotation axis A. This is possible with various slots and keys, see for example slot 416 in central utensil 410 shown in Figure 5a Optionally, as shown in central utensil embodiment 410' in Figure 5b, a slot 440' is provided that includes a tooth 442'. When an accessory and resilient means (not shown) are mounted on the central utensil 410' and the accessory's key is slid into slot 440', resilient means positioned between the central utensil 410' and the accessory causes the key to be held by the tooth 442' and thus the accessory is prevented from disengagement from the central utensil by vertical and/or horizontal motion of the food processing utensil during the operation of the food processor; however, advantageously, the accessory is not secured to the central utensil 400' as the accessory is free to bounce parallel to the rotation axis A. In other embodiments, the slot is on the accessory and the key is on the central utensil - such embodiments follow the similar structural and functional features. Figure 5c shows the accessory 400' viewed from above.

Returning to Figure 5a, the central utensil 400 further comprises ridges 418 that may help bounce the food to blades and/or paddles on the accessory.

In some embodiments, the food processor further comprises a cover coupled to the open top, wherein at least one of said springs is held between the accessory or central utensil (or in food processors without an accessory, the food processing utensil) and the cover.

In some embodiments a cover is coupled to the open top, and resilient means is held between the food processing utensil and the cover or in the cover, allowing the food processing utensil or a part thereof to bounce parallel to the rotation axis upon contact of at least one of the food-processing elements of the food processing utensil with a food preparation in the bowl; either the blades or other element of the food processing utensil may contact incompletely cut food from *below* the element, in which case the entire food processing utensil may rise, or elements of the accessory alone may encounter food that forces the accessory upwards, in which case the accessory may rise while the central utensil does not. In other embodiments the elements may contact food from above the element that causes the food processing utensil or a part thereof to bounce; in yet other embodiments some elements may cause bouncing upon encountering some food below the element, while other elements may cause bouncing upon encountering food above the element.

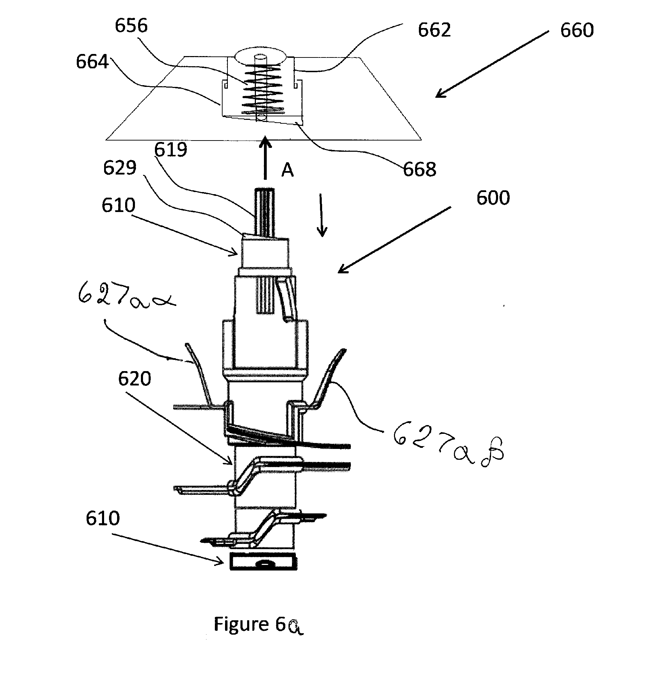

In some embodiments, resilient means are installed into the cover that fits onto the open top, or between the cover and the central utensil and/or accessory. For example, as shown in a schematic view in Figure 6a, resilient means 656 (a spring) is installed into a cover 660. Top holder 662 may be installed into a suitably positioned and sized hole in the cover 660, spring 656 installed into the hole, and bottom holder 664 with a slanted part, cover shoulder 668, snapped onto top holder 662 to hold the spring 656 within the holders 662, 664. The spindle 619 of the central utensil 610 can be inserted through the cover shoulder 668 and the top holder 662 to be coupled to rotating means. The central utensil 610 or accessory 620 contact the cover shoulder 668 when raised by food, causing the cover shoulder 668 to rise and compress spring 656, and the spring 656 causes the food processing utensil or the accessory to bounce and eventually return to a lower position in the bowl. Besides helping to evenly process the food, resilient means in the cover help to protect the cover and central utensil/accessory from damage. Other similar structures allowing performing the same function will occur to the skilled in the art.

In some embodiments, resilient means include both resilient means in the cover or between the cover and the food processing utensil, and additional resilient means on or in the food processing utensil, as described above.

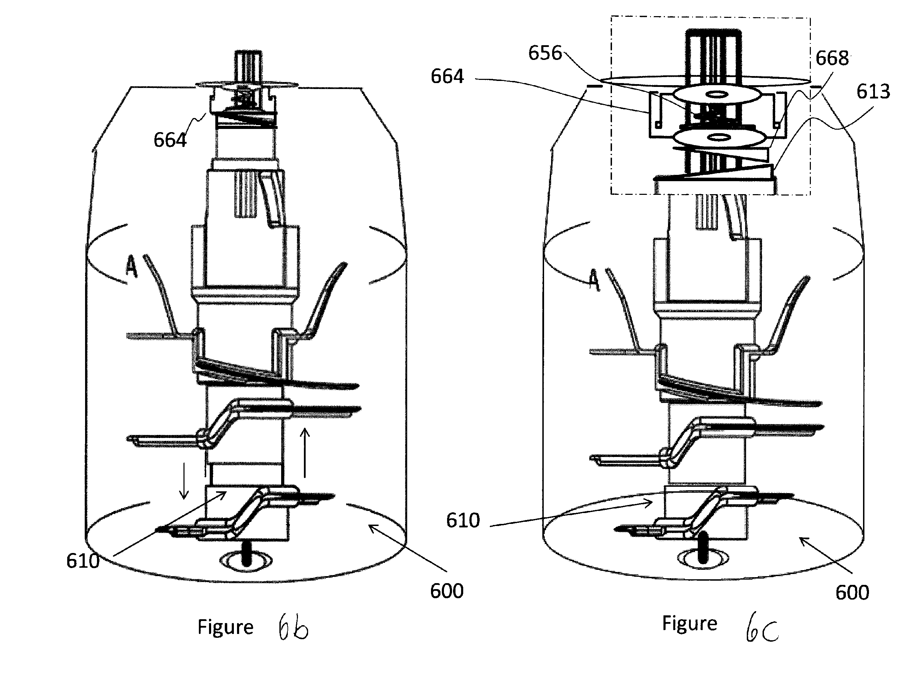

In some food processor embodiments, rotation of the food processing utensil causes the food processing utensil or a part thereof to bounce, even without collisions with food: for example, in reference to Figure 6a, the cover shoulder 668, and the shoulder 629 of the accessory 620, are both slanted such that during rotation of the food processing utensil 600 about the rotation axis A, the accessory 620 is pushed down, a spring such as 354 (shown in Figure 4) compressed, and released, as shown in Figures 6b and 6c. In alternative embodiments (not shown), a shoulder may be on the central utensil, so that all of the food processing utensil will bounce. In some of the embodiments there may be no resilient means, and interaction with food may push the food processing utensil up after being pushed down by the cover shoulder. Similar structures fulfilling the same function will occur to the skilled in the art.

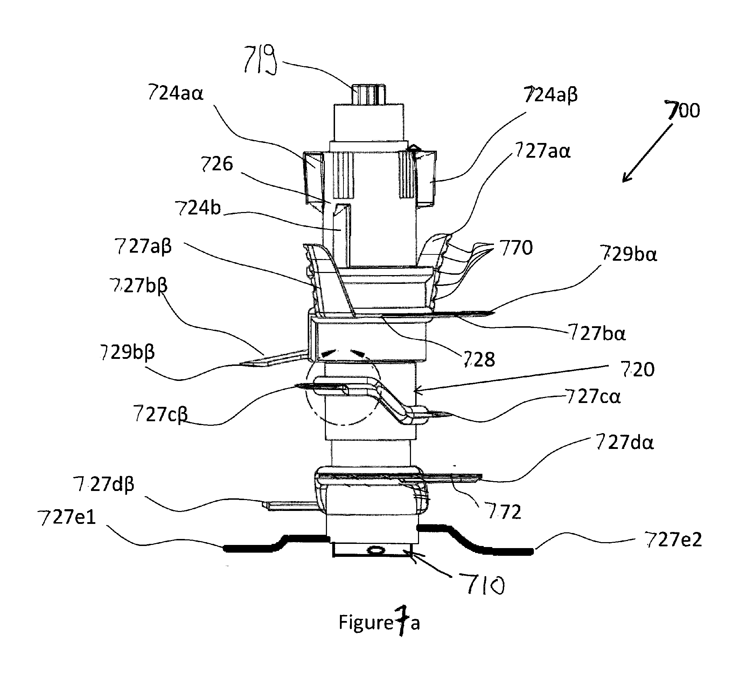

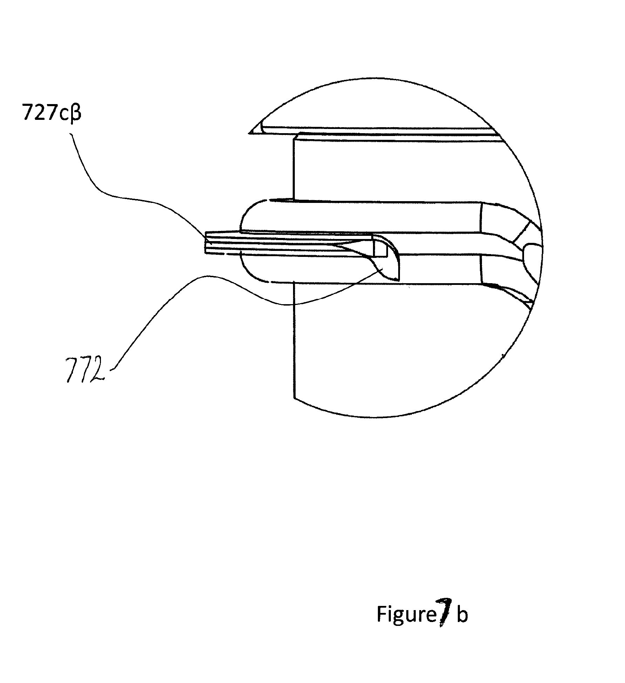

Figure 7a illustrates a food processing utensil embodiment 700 wherein some of the blades have teeth 770 and flaps 772, and Figure 7b shows an expanded view of a blade 727cß with a flap 772.

The embodiment 700 fits into a food processor for concomitantly stirring, whipping and chopping food preparations the food processor (not shown) comprises: a correspondent motor, a correspondent bowl with a bottom and walls, and a food processing utensil, the food processing utensil 700 includes an accessory 720, which has two paddles (only 724bα visible); two wings 724aα, 724aß; top cutting blades 727aα, 727aß; cutting blades 727bα, 727bß, 727cα, 727cß, 727dα, 727dß, 727e1 and 727e2. The central utensil 710 does not have any blades. Bottom blades 727e1 and 727e2 have free ends that reach close to the bowl bottom.

The paddles 724b, blades 727 and wings 724a are coupled to the central utensil 710 and configured such that when the bowl is filled with a food preparation to at least the level of the paddles, and the central utensil 710 is coupled to the motor and the bowl and then rotated in the food preparation around a rotational axis, the food is uniformly cut and/or whipped. Notably, the top blades 727a are partially vertical and reach up to a level above the bottom of the paddles 724. In similar embodiments they reach up to the wings. When a food preparation is placed in the bowl up to the level of the paddles, all of the blades as well as the paddles contact the preparation, each performing its own function on the food preparation - coarse chopping, fine chopping, stirring, etc. In particular, the top blades 727a may, in addition to the wings 724a, assist in the whipping, as well as cutting the food in a more vertical direction than the other blades. The paddles 724b may also assist in whipping, by the food preparation being anywhere between just below the level of the bottom of the paddles and the top of the paddles. The paddles may move both air and food radially outward to the walls, and the wings may push the air downwards. Together, air may pass through the food preparation in a cyclone-like movement, thereby both aerating and circulating the food preparation.

Whipping and/or cutting may be particularly uniform when the food preparation is filled to just below the wings. Note that the free ends of the top blades 727a extend to a level in the bowl closer to the open top than to the bottom of the bowl (not shown) - the top is roughly at the level of the spindle 719. Overall, the many blades occupy most of the span of the walls of the bowl, so that even when a fairly sizeable food preparation is placed in the bowl, the cutting is uniform. In fact, the food processor may provide best results with such sizes of food preparations. The high effective loading capacity is in stark contrast to many commercial food processors equipped with blades positioned in the lower portion of the bowl, that cannot effectively chop or otherwise process the levels of the food preparation that are far above the blades. In similar embodiments, even more blades and/or paddles and/or wings are situated on the central utensil and/or accessory, which may help to decrease the cutting time or even further improve the uniformity of the preparation.

Although not apparent in the perspective view of Figure 7a, but perhaps apparent in blades 627aα, 627aß in Figure 6a, the top blades 727a are not identical. One has an incline angle of 20° from the rotational axis, whereas the other has an angle of 27°. In general the angles may be between 10 and 40°.

The blades each have a fixed end 728. Note that blades 727bα, 727bß are twin blades of very similar form (similar to that of blades 127bα and 127bß in Figure 3); however they are at different levels. Moreover, blade 727bα has the free end 729bα and the fixed end 728 equidistant to the bowl bottom, whereas blade 727bß has the free end 729bß closer than the fixed end (not visible) to the bowl bottom. Preferably, the downward inclining blades are inclined at an angle of roughly 95 to 100° to the rotation axis.

Preferably, the free end of at least the lowest blades 727e is no more than 5mm away from the walls and bottom.

The wings 724a may be roughly 50-15° from the rotational axis; the paddles have a triangular structure, preferably an isosceles triangle having a vertex angle 726 of roughly 60-100°, most preferably around 80°.

The wings 724a are preferably inclined roughly at 50-15° from the rotational axis.

The wings each preferably extend at least 2mm from the body; have an arc length of at least 5 and an incline of roughly 15 to 50°, and the paddles each have a height of at least 2 mm.

The tops of the paddles 724b correspond with the bottoms of the wings 724a. However, in similar embodiment they are above the bottoms of the wings.

Referring to an exploded view of part of blade 727cß, the blades of the accessory 727cα and 727cß each comprise a flap 780.inclined toward the bowl bottom (which is not shown). The flaps 780 typically are inclined at an angle of 95-120° to the rotation axis. The flaps 780 may help to dislodge big particles below their blades, and create a lift on the blades to which they are attached similar to the effect of flaps on airplane wings.

In particular, the accessory 720 may comprise at least one spring (not shown) within the accessory 720, the spring allowing the accessory to move parallel to the rotation axis upon contact of at least one accessory blade with a food preparation. The flaps 780 may help to lift the blade, and the blade thereafter can return to a lower position. Thus the blades and paddle of the accessory may operate at varying levels of the food preparation, lending further homogeneity to the food preparation. Note that a common problem of food processors is that the utensils may be pushed upwards by the food preparation until a cover over the bowl top may be damaged. This damage may be avoided by having the spindle 719 proximal to the open top of the bowl, i.e. the motor is positioned above the bowl top, and its weight prevents the accessory from excessively rising. Blades with flaps may be substantially wider than the blades not equipped with flaps, so at to allow larger lift.

The free ends of some of the blades may have a tangent at the cutting edge of their radial outer end that forms an angle of between 0 and 20° with the tangent of the wall adjacent to the radial outer end. Such are the blades 127b, 27b shown in Figure 3.

Some of the blades may have ledges next to the cutting edge of the blade, as blades 127b, 27b shown in Figure 3 have. The ledges may form an elevation over the rest of the blade (behind the cutting edge), to lend reduced resistance of the blades to movement in the direction of the spinning of the utensil 100.

The food processor is configured to allow rotation of the central utensil sufficiently fast to whip the food preparation.

For example, the motor is capable of variable speed. For food processor with a bowl with an inner diameter of about 11cm and a corresponding utensil having a configuration similar to the embodiment in Figure 7a, best whipping results are obtained by stirring for a few seconds at 1500 rpm, then stirring at 2000 rpm. A stiff meringue may be obtained within about 30-40s, whereas most egg white beaters and whippers require at least 90s to obtain similar products.

Similarly, about 150g of coffee beans can be grinded within 30-40s.

Whipped cream may be prepared at 1000 rpm within about 20 to 25s, and evenly cut salad at that rpm in typically 2s.

The bottom of the bowl may have an opening that can be selectively closed, for easy removal of food and cleaning of the bowl. Some of the blades of the processor may be configured to help removing/cleaning the food from the bowl.

Such bowls may be placed in cabinets wherein which there are cleaning apparatus that may include cleaning liquid, waste etc tubing, and other accessories to facilitate cleaning and emptying.

One of the advantages of embodiments described above is that for various food preparations a very short operation time, typically a few seconds, may be required to obtain excellently uniform food. In addition, the food may be very finely cut, whipped and/or chopped within a very short time, for example it may require several seconds only to produce finely powdered sugar from sugar cubes. In particular, very short operation of the devices described above may produce more coarsely cut material, yet it has been found that even so, the material is very uniformly cut.

The uniform cutting is attributed to the unique configurations of the devices described above, namely particular synergic cutting and circulating element configurations for food processors.

There are many commercially available food processing utensils that include a central food processing utensil and an accessory. Thus, according to another aspect,
a food processing accessory retrofittable to a central utensil is provided,
the retrofittable accessory comprising: resilient means, and at least one of food-processing elements selected from a group comprising: blades, paddles and wings,
the central utensil rotatable in a bowl about a rotation axis,
the accessory configured to be mountable on the central utensil and to bounce parallel to the rotation axis upon contact of at least one of said food-processing elements with a food preparation in the bowl.
the retrofittable accessory may comprise a slot and/or or a key, and the central utensil may have a slot and/or a key, to fit a key or slot, respectively, of the accessory, without the accessory and central utensil being secured to each other, similar to the structure in some of the food processor embodiments described above.

It should be clear that the description of the embodiments and attached Figures set forth in this specification serves only for a better understanding of the invention, without limiting its scope as covered by the following Claims.

It should also be clear that a person skilled in the art, after reading the present specification can make adjustments or amendments to the attached Figures and above described embodiments that would still be covered by the following claims.

## Claims

1. A food processor provided with a bowl having an open top, a bottom and walls **characterized by**:
a food processing utensil (300) coupled to the bowl and configured to rotate in the bowl about a rotation axis, said food processing utensil provided with food-processing elements (327) selected from the group comprising: blades, paddles, wings and combinations thereof; and
resilient means (352, 354) configured to allow the food processing utensil or a part thereof to bounce relative to the rotation axis.

2. A food processor provided with a bowl with an open top, a bottom, walls, and a cover coupled to the open top, the food processor **characterized by**:
a food processing utensil coupled to the bowl and provided with food-processing elements selected from the group comprising: blades, paddles and wings and combinations thereof, wherein the food processor is configured to allow the coupled food processing utensil to rotate in the bowl about a rotation axis;
a slanted shoulder provided to said food processing utensil;
a slanting part provided to the cover;
wherein the food processor is configured to allow the food processing utensil or a part thereof to bounce during rotation of the food processing utensil from interaction of the slanted shoulder and the slanting part of the cover.

3. The food processor of claim 2, further comprising resilient means allowing the food processing utensil or a part thereof to bounce during rotation of the food processing utensil.

4. The food processor of any one of claims 1 to 3, the food processing utensil further comprising a central utensil and a food processing accessory coupled to the central utensil, wherein the food processing accessory is provided with at least one of said food-processing elements and said central unit is sleeved in and coupled to the food processing accessory.

5. The food processor of any one of claims 1 to 4, wherein the food processing utensil is provided with at least one blade comprising a flap inclined toward the bowl bottom.

6. The food processor of any one of claims 1 to 5, wherein the wings extend out from the food processing utensil, and are arcuate and inclined roughly 15-50° from the rotational axis.

7. The food processor of any one of claims 1 to 6, wherein the blades comprise a set of top blades, each top blade comprising a flat horizontal base and a free end extending away from the bottom of the bowl and at least to the paddles.

8. The food processor of claim 7, wherein the top blades extend to the wings.

9. The food processor of claim 7 or 8, wherein the angles of the top blades relative to the axis of rotation are different from each other.

10. The food processor of any one of claims 1 to 6, wherein each of the blades has a fixed end, and wherein at least one blade has the free end closer to the bowl bottom than the fixed end.

11. The food processor of any one of claims 1 to 10, further comprising resilient means configured to allow the food processing utensil or a part thereof to bounce parallel to the rotation axis upon contact of at least one of said food-processing elements with a food preparation in the bowl.

12. The food processor of any one of claims 1 to 10, wherein said resilient means is held between the food processing utensil and the cover or in the cover.

13. The food processor of any one of claims 1 to 10, wherein said resilient means is held between the food processing utensil and the bowl.

14. The food processor of any one of claims 1 to 10, wherein said resilient means is held within the food processing accessory.

15. The food processor of any one of claims 1, 3, 12, 13 or 14, wherein said resilient means comprises at least one spring.
